(19) Europäisches Patentamt
European Patent Office
Office européen des brevets

(11) **EP 3 053 244 B1**

(12) **FASCICULE DE BREVET EUROPEEN**

(45) Date de publication et mention
de la délivrance du brevet:
**05.07.2017 Bulletin 2017/27**

(21) Numéro de dépôt: **14777592.8**

(22) Date de dépôt: **30.09.2014**

(51) Int Cl.:
*H02J 1/00* (2006.01)       *H02J 7/00* (2006.01)
*H02J 7/34* (2006.01)

(86) Numéro de dépôt international:
**PCT/EP2014/070869**

(87) Numéro de publication internationale:
**WO 2015/044438 (02.04.2015 Gazette 2015/13)**

(54) **DISPOSITIF D'ALIMENTATION ELECTRIQUE D'UNE CHARGE ET PROCEDE ASSOCIE**

VORRICHTUNG ZUR ELEKTRISCHEN ENERGIEVERSORGUNG EINER LAST UND ZUGEHÖRIGES VERFAHREN

DEVICE FOR THE ELECTRIC POWER SUPPLY OF A LOAD AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2013 FR 1359454**

(43) Date de publication de la demande:
**10.08.2016 Bulletin 2016/32**

(73) Titulaires:
• **Airbus Group SAS**
**31700 Blagnac (FR)**
• **Airbus Safran Launchers SAS**
**75015 Paris (FR)**

(72) Inventeurs:
• **FLEURY, Benoit**
**F-78300 POISSY (FR)**
• **MASSIOT, Gregor**
**F-31000 Toulouse (FR)**
• **LANCELEVEE, Pierre-Bertrand**
**F-13100 Aix en Provence (FR)**
• **LABBE, Julien**
**F-92300 Levallois-Perret (FR)**

(74) Mandataire: **Ipside**
**29, rue de Lisbonne**
**75008 Paris (FR)**

(56) Documents cités:
EP-A2- 2 360 806        US-A1- 2005 151 513
US-A1- 2012 319 653      US-B1- 6 204 633

**Description**

**Domaine de l'invention**

La présente invention se rapporte à un dispositif d'alimentation électrique d'une charge. L'invention se rapporte également au procédé associé. L'invention concerne plus particulièrement les dispositifs d'alimentation électrique comportant plusieurs sources de stockage d'énergie également connus sous le terme « alimentation hybride ».

On entend par « alimentation hydride » une alimentation comprenant plusieurs sources de stockage d'énergie telles qu'une batterie associée à un pack de super-condensateurs ou encore une batterie associée à une pile à combustible.

L'invention trouve des applications dans de nombreux domaines et peut être utilisée dans les aéronefs, les satellites ou encore les véhicules spatiaux.

**Etat de la technique**

Il existe plusieurs dispositifs connus utilisant plusieurs sources de stockage d'énergie alimentant une charge. Ces dispositifs sont notamment présents dans les bus électriques, les tramways ou les automobiles électriques ou hybrides. Ces dispositifs mettent en oeuvre des sources de stockage d'énergie complémentaires, tel qu'une batterie et un pack de super-condensateurs. L'art antérieur connait notamment le brevet N° FR 2 947 006 décrivant ce type de dispositif ainsi que le document US 2012/319653 A1. Généralement, la mise en oeuvre de la complémentarité des sources est réalisée par simple mise en parallèle ou mise en série des technologies de stockage d'énergie. Cependant, cette solution technique ne permet pas d'utiliser efficacement les sources de stockage d'énergie. Les besoins de puissance de la charge varient au cours du temps. Un des buts de la présente invention est de répartir ces besoins de puissance entre les différentes sources de stockage d'énergie.

De plus, l'utilisation d'une alimentation hybride dans le cadre d'un aéronef ou d'un véhicule spatial impose une problématique supplémentaire concernant la prévention du vieillissement des sources de stockage d'énergie. En effet, il est nécessaire que le vieillissement des sources de stockage d'énergie soit contrôlé de telle sorte que la spécification de durée de vie du système, typiquement de l'ordre de dix ans, soit respectée.

L'art antérieur connait la publication scientifique intitulée « An Energy Management System for a Battery Ultracapacitor Hybrid Electric Vehicle » publiée lors de la « Fourth International Conference on Industrial and Information Systems, ICIIS 2009, 28 - 31 December 2009, Sri Lanka » ainsi que la publication scientifique intitulée « Optimizing for Efficiency or Battery Life in a Battery/Supercapacitor Electric Vehicle » publiée dans la revue « IEEE TRANSACTIONS ON VEHICULAR TECHNOLOGY, VOL. 61, NO. 4, MAY 2012 ». Ces documents présentent des lois de contrôle et de commande dans lesquels une puissance maximale sécurisée de chaque élément de stockage d'énergie est fixée de manière statique et ne prend pas en compte les variations de l'état interne et de l'état de dégradation de l'élément de stockage.

**Exposé de l'invention**

La présente invention entend répondre aux problématiques de vieillissement et d'optimisation de l'utilisation des sources de stockage d'énergie en proposant, selon un premier aspect, un dispositif d'alimentation électrique d'une charge.

A cet effet, la présente invention concerne un dispositif comportant au moins deux éléments de stockage d'énergie connectés à ladite charge, lesdits éléments de stockage d'énergie comportant un courant maximum de décharge spécifié et une tension minimum spécifiée garantissant une durée de vie desdits éléments de stockage d'énergie, des moyens de détermination des besoins de puissance de ladite charge, des moyens de commande de chaque élément de stockage d'énergie aptes à définir une puissance délivrée par ledit élément de stockage d'énergie, et des moyens de supervision de chaque élément de stockage d'énergie aptes à renseigner sur une puissance maximum instantanée pouvant être demandée audit élément de stockage d'énergie, lesdits moyens de supervision étant aptes à renseigner sur une force électromotrice et une résistance du modèle équivalent de Thevenin de chaque élément de stockage d'énergie traduisant l'état interne et l'état de santé de chaque élément de stockage d'énergie, le dispositif comportant un organe de calcul apte à déterminer, pour chaque élément de stockage d'énergie, une puissance maximale sécurisée en fonction de la force électromotrice et de la résistance, du courant maximum spécifié et de la tension minimum spécifiée, et lesdits moyens de commande étant ajustés au cours du temps en fonction des besoins de puissance de ladite charge et de la puissance maximale sécurisée de chaque élément de stockage d'énergie.

L'invention permet ainsi de limiter la surexploitation des éléments de stockage d'énergie au cours du temps en limitant leur utilisation aux plages de paramètres de courant et de tension spécifiées par le constructeur. Ces plages de paramètres garantissent une durée de vie des éléments de stockage d'énergie, typiquement de l'ordre de dix ans.

L'invention réduit ainsi l'endommagement desdits éléments de stockage d'énergie au cours du temps.

Selon un mode de réalisation, lesdits éléments de stockage d'énergie comportant un courant maximum de recharge spécifié et une tension maximum de recharge spécifiée garantissant une durée de vie desdits éléments de stockage d'énergie, l'organe de calcul est apte à déterminer, pour chaque élément de stockage d'énergie, la puissance maximale de recharge sécurisée en fonction de la force électromotrice et de la résistance traduisant l'état interne et l'état de santé de chaque élément de stockage d'énergie, du courant maximum de recharge spécifié et de la tension maximum de recharge spécifiée, lesdits moyens de commande étant ajustés au cours du temps en fonction des besoins de puissance de ladite charge, de la puissance maximale sécurisée et de la puissance maximale de recharge sécurisée de chaque élément de stockage d'énergie. Ce mode de réalisation permet, par exemple, d'utiliser un premier élément de stockage d'énergie pour recharger un second élément de stockage d'énergie lorsque les besoins de puissance de la charge sont inférieurs à la puissance maximale sécurisée du premier élément de stockage d'énergie.

Selon un mode de réalisation, au moins un élément de stockage d'énergie est une batterie, un ensemble de super-condensateurs ou une pile à combustible. Ce mode de réalisation permet d'assembler un premier élément de stockage d'énergie avec une vitesse de charge et de décharge rapide, tel qu'un ensemble de super-condensateurs, avec un second élément de stockage d'énergie dont la vitesse de charge et de décharge est moins importante, tel qu'une batterie.

Selon un mode de réalisation, la force électromotrice du modèle équivalent de Thévenin de chaque élément de stockage d'énergie est déterminée par une loi de comportement exprimée en fonction de l'utilisation de l'élément de stockage d'énergie. Ce mode de réalisation permet de connaitre l'état interne et l'état de santé en fonction du temps de chaque élément de stockage d'énergie.

Selon un mode de réalisation, les moyens de supervision sont aptes à renseigner sur un état interne de chaque élément de stockage d'énergie, l'organe de calcul étant apte à déterminer une force électromotrice et une résistance du modèle équivalent de Thevenin de chaque élément de stockage d'énergie en fonction de l'état interne de chaque élément de stockage d'énergie, lesdits moyens de commande étant ajustés au cours du temps en fonction de la force électromotrice et de la résistance. Ce mode de réalisation permet d'intégrer les fluctuations internes de chaque élément de stockage d'énergie. Par exemple, ce mode de réalisation permet d'intégrer les fluctuations de température d'un élément de stockage d'énergie et limite l'utilisation de l'élément de stockage d'énergie dans une plage de valeurs de température garantissant sa durée de vie.

Selon un mode de réalisation, la force électromotrice et la résistance sont variables au cours du temps. Ce mode de réalisation permet d'estimer avec précision la force électromotrice et la résistance du modèle équivalent de Thevenin.

Selon un mode de réalisation, ladite puissance maximale sécurisée est déterminée par l'équation suivante :

$$
\begin{aligned}
Pbat.max.spec(t) \\
= \min\left[\frac{E^2bat(t)}{4\text{Rbat(t)}}, \frac{(Ebat(t) - Vbat.min)Vbat.min}{\text{Rbat(t)}}, Ebat(t)Ibat.max \right. \\
\left. - Rbat(t)I^2bat.\max\right].
\end{aligned}
$$

Selon un mode de réalisation, ladite puissance maximale de recharge sécurisée est déterminée par l'équation suivante :

$$
\begin{aligned}
Pbat.max.rech.spec(t) \\
= \max\left[-\frac{(Vbat.max - Ebat(t))Vbat.max}{\text{Rbat(t)}}, Ebat(t)Ibat.rech.max \right. \\
\left. - Rbat(t)I^2bat.rech.\max\right].
\end{aligned}
$$

Selon un second aspect, l'invention concerne un procédé de contrôle et de commande d'un dispositif d'alimentation électrique comportant les étapes suivantes : déterminer au cours du temps ladite puissance maximale sécurisée du premier élément de stockage d'énergie, comparer les besoins de puissance de la charge avec la puissance maximale sécurisée du premier élément de stockage d'énergie, et ajuster les moyens de commande pour utiliser le second élément de stockage d'énergie lorsque les besoins de puissance de la charge sont supérieurs à la puissance maximale sécurisée du premier élément de stockage d'énergie. Ce mode de réalisation permet de préserver le premier élément de stockage d'énergie et de réduire l'utilisation du second élément de stockage d'énergie.

Selon un mode de réalisation, le procédé comporte les étapes suivantes : déterminer une puissance disponible en fonction du temps lorsque les besoins de puissance de la charge sont inférieurs à la puissance maximale sécurisée du premier élément de stockage d'énergie, comparer la puissance disponible du premier élément de stockage d'énergie avec une puissance maximale de recharge sécurisée du second élément de stockage d'énergie, et ajuster les moyens de commande pour recharger le second élément de stockage d'énergie avec la puissance disponible du premier élément de stockage d'énergie. Ce mode de réalisation permet d'utiliser le second élément de stockage d'énergie en source d'appoint lorsque la demande de la charge est importante. Cette source d'appoint est ultérieurement rechargée par la source principale lorsque les besoins de la charge sont moins importants que les capacités de production de la source principale garantissant sa durée de vie.

## Brève description des dessins

On comprendra mieux l'invention à l'aide de la description, faite ci-après à titre purement explicatif, des modes de réalisation de l'invention, en référence aux Figures dans lesquelles :

- la Figure 1 illustre une représentation schématique des puissances d'un dispositif d'alimentation électrique d'une charge selon un mode de réalisation de l'invention ;
- la Figure 2 illustre une représentation schématique du modèle équivalent de Thevenin du premier élément de stockage d'énergie de la Figure 1 ;
- la Figure 3 illustre une représentation schématique des moyens de commande et de supervision du dispositif de la Figure 1 ; et
- la Figure 4 est un ordinogramme illustrant l'algorithme de contrôle et de commande du dispositif illustré Figure 1.

## Description détaillée des modes de réalisation de l'invention

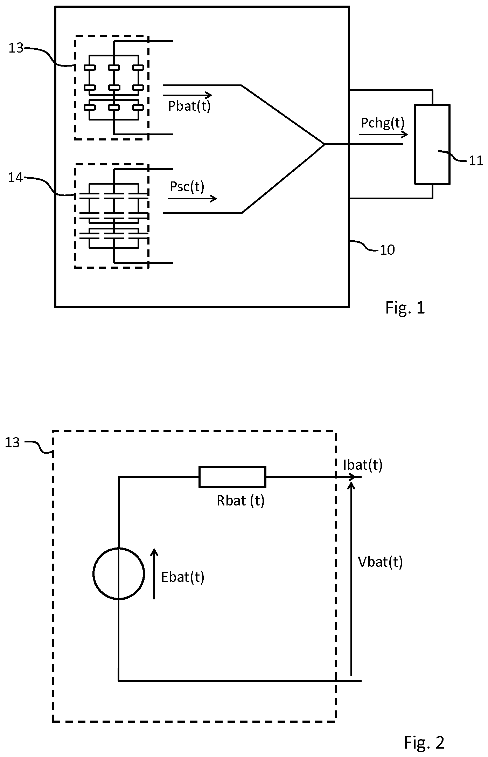

La Figure 1 illustre un dispositif d'alimentation électrique 10 d'une charge 11. Les besoins de puissance Pchg(t) de la charge 11 sont complétés au cours du temps par deux éléments de stockage d'énergie 13, 14. Dans ce mode de réalisation, le premier élément de stockage d'énergie 13 correspond à un ensemble de batteries délivrant une puissance Pbat(t) et le second élément de stockage d'énergie 14 correspond à un ensemble de super-condensateurs délivrant une puissance Psc(t). En variante, ces éléments de stockage d'énergie peuvent varier sans changer l'invention. La charge 11 correspond à un actionneur quelconque tel qu'un servo-vérin.

Chaque élément de stockage d'énergie 13, 14 est modélisé par un modèle équivalent de Thevenin. Ce modèle est représenté sur la Figure 2 pour le premier élément de stockage 13. Le modèle équivalent comporte une source de tension Ebat(t) en série avec une résistante Rbat(t). La source de tension Ebat(t) représente la force électromotrice de la source à l'instant t estimée à partir d'une loi de dégradation de la source et de l'état interne de la source. La résistance Rbat(t) est également estimée en fonction de l'état interne de la source. Ce modèle équivalent permet de modéliser le courant Ibat(t) de décharge de la source ainsi que la tension Vbat(t) aux bornes de la source à l'instant t.

Ces composants Ebat(t) et Rbat(t) du modèle équivalent de Thevenin permettent de calculer la puissance Pbat.max(t) maximum instantanée pouvant être demandée à la source selon l'équation :

$$Pbat.max(t) = \frac{E^2 bat(t)}{4\text{Rbat(t)}} \; .$$

En outre, chaque éléments de stockage d'énergie 13, 14 est réalisé pour fonctionner dans des conditions particulières garantissant sa durée de vie. Les conditions d'utilisation de décharge sont définies par un courant Ibat.max maximum de décharge spécifié, une tension Vbat.min minimum admissible spécifiée ou encore une plage de température de fonctionnement spécifiée. De même, les conditions d'utilisation en charge sont définies par un courant Ibat.rech.max maximum de recharge spécifié, une tension Vbat.rech.max maximum de recharge spécifiée ou encore une plage de température de fonctionnement spécifiée.

Ces informations permettent de calculer une puissance Pbat.max.spec(t) maximum instantanée de décharge pouvant être demandée à la source, sous contrainte de respecter l'ensemble des spécifications portant sur la source. Cette puissance maximale sécurisée Pbat.max.spec(t) peut être déterminée selon l'équation suivante :

$$Pbat.\,max.\,spec(t)$$
$$= \min\left[\frac{E^2bat(t)}{4\mathrm{Rbat}(t)}, \frac{(Ebat(t) - Vbat.\,rech.\,max)Vbat.\,rech.\,max}{\mathrm{Rbat}(t)}, Ebat(t)Ibat.\,max\right.$$
$$\left. - Rbat(t)I^2bat.\,\max\right].$$

Ces informations permettent également de calculer une puissance Pbat.max.rech.spec(t) maximum instantanée de recharge pouvant être demandée à la source, sous contrainte de respecter l'ensemble des spécifications portant sur la source. Cette puissance maximale de recharge sécurisée Pbat.max.rech.spec(t) peut être déterminée selon l'équation suivante :

$$Pbat.\,max.\,rech.\,spec(t)$$
$$= \max\left[-\frac{(Vbat.\,max - Ebat(t))Vbat.\,max}{\mathrm{Rbat}(t)}, Ebat(t)Ibat.\,rech.\,max\right.$$
$$\left. - Rbat(t)I^2bat.\,rech.\,\max\right].$$

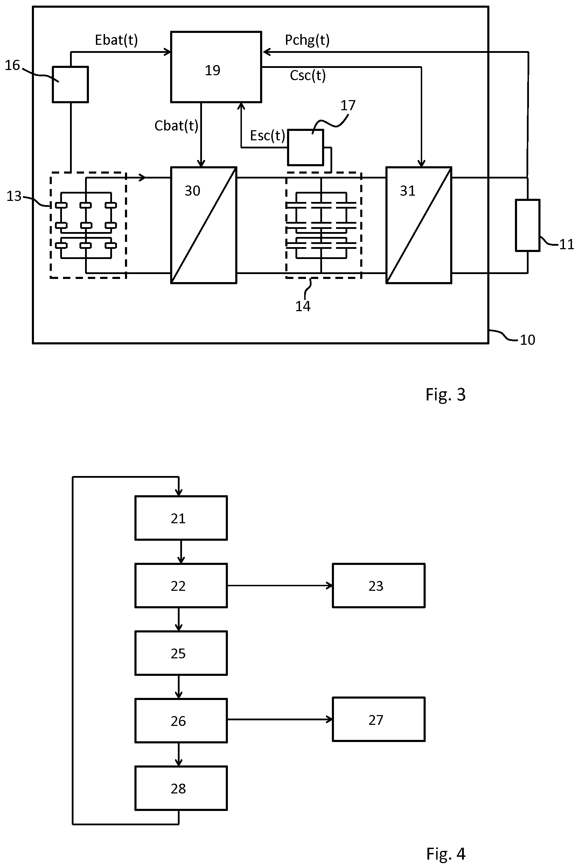

De préférence, ces puissances Pbat.max.spec(t) et Pbat.max.rech.spec(t) sont déterminées pour chaque élément de stockage d'énergie 13, 14. Ces puissances Pbat.max.spec(t) et Pbat.max.rech.spec(t) sont estimées par un organe de calcul 19 représenté sur la Figure 3. L'organe de calcul 19 commande également deux convertisseurs 30, 31 aptes à définir une puissance Pbat(t) et Psc(t) délivrée par les éléments de stockage d'énergie 13, 14 par l'intermédiaire de deux moyens de commande Cbat(t) et Csc(t). Les moyens de commande Cbat(t) et Csc(t) sont ajustés au cours du temps t en fonction des besoins de puissance Pchg(t) de la charge 11 et de la puissance maximale sécurisée Pbat.max.spec(t) de chaque élément de stockage d'énergie 13, 14.

La Figure 4 est un ordinogramme représentant le fonctionnement de l'organe de calcul 19. Dans une première étape 21, l'organe de calcul 19 détermine la puissance maximale sécurisée Pbat.max.spec(t) du premier élément de stockage 13. Cette puissance maximale sécurisée Pbat.max.spec(t) est ensuite comparée avec les besoins de la puissance Pchg(t) de la charge 11 dans une seconde étape 22.

Lorsque les besoins de puissance Pchg(t) de la charge 11 sont supérieurs à la puissance maximale sécurisée Pbat.max.spec(t), le premier élément de stockage d'énergie 13 ne peut pas fournir à lui seul la puissance requise par la charge 11 en respectant les contraintes et l'organe de calcul 19 ajuste, lors d'une étape 23, les moyens de commande Cbat(t) et Csc(t) en conséquence. Le premier élément de stockage d'énergie 13 délivre le maximum de la puissance maximale sécurisée Pbat.max.spec(t) et le second élément de stockage d'énergie 14 délivre le reste de puissance requise soit les besoins de la puissance Pchg(t) de la charge 11 moins la puissance maximale sécurisée Pbat.max.spec(t) du premier élément de stockage d'énergie 13.

Lorsque les besoins de puissance Pchg(t) de la charge 11 sont inférieurs à la puissance maximale sécurisée Pbat.max.spec(t), le premier élément de stockage d'énergie 13 peut fournir à lui seul la puissance requise par la charge 11. L'organe de calcul 19 détermine, lors d'une étape 25, une puissance disponible Pbat.disp(t) correspondant à la différence entre la puissance maximale sécurisée Pbat.max.spec(t) et les besoins de puissance Pchg(t) de la charge 11. Cette puissance disponible Pbat.disp(t) est ensuite comparée, lors d'une étape 26, avec la puissance maximale de recharge sécurisée Pbat.max.rech.spec(t) du second élément de stockage d'énergie 14.

Lorsque la puissance disponible Pbat.disp(t) est inférieure à la puissance maximale de recharge sécurisée Pbat.max.rech.spec(t) du second élément de stockage d'énergie 14, l'organe de calcul ajuste, lors d'une étape 28, les moyens de commande Cbat(t) et Csc(t) pour que le premier élément de stockage d'énergie 13 fournisse la puissance maximale sécurisée Pbat.max.spec(t) afin de combler les besoins de puissance Pchg(t) de la charge 11 et recharger le second élément de stockage d'énergie 14.

Lorsque la puissance disponible Pbat.disp(t) est supérieure à la puissance maximale de recharge sécurisée Pbat.max.rech.spec(t) du second élément de stockage d'énergie 14, l'organe de calcul ajuste, lors d'une étape 27, les moyens de commande Cbat(t) et Csc(t) pour que le premier élément de stockage d'énergie 13 fournisse une puissance apte à combler les besoins de puissance Pchg(t) de la charge 11 et recharger le second élément de stockage d'énergie 14 selon sa puissance maximale de recharge sécurisée Pbat.max.rech.spec(t).

L'invention permet ainsi de répartir efficacement la puissance disponible de deux éléments de stockage d'énergie 13, 14. En variante, le dispositif de l'invention pourrait comporter plus de deux éléments de stockage d'énergie. La répartition de l'alimentation électrique sur plusieurs éléments de stockage d'énergie permet de diminuer ou d'optimiser la masse des éléments de stockage d'énergie embarqués à bord des aéronefs ou des véhicules spatiaux. De plus, l'invention permet de prévenir le vieillissement des éléments de stockage d'énergie en limitant leur utilisation à des conditions d'utilisations spécifiées.

L'invention apporte une solution concrète et cruciale pour la qualification en durée de vie des alimentations hybrides pour le secteur aérospatial. Ceci est d'autant plus important que le concept d'alimentation hybride trouve de plus en plus d'applications dans le secteur aérospatial. Citons notamment :

- les alimentations hybrides pour la fourniture de puissance électrique des servomoteurs électromécaniques des aéronefs, notamment pour l'orientation des tuyères sur les lanceurs spatiaux ;

- les alimentations hybrides pour la gestion des appels de puissance à bord des satellites, notamment pour les systèmes de télédétection par laser ;

- les alimentations hybrides de la turbine éolienne entrainent un générateur électrique de secours des aéronefs ; et

- les alimentations hybrides pour la fourniture de puissance électrique des démarreurs des turbines d'hélicoptères.

**Revendications**

**1.** Dispositif d'alimentation électrique (10) d'une charge (11) comportant :

- au moins deux éléments de stockage d'énergie (13, 14) connectés à ladite charge (11), lesdits éléments de stockage d'énergie (13, 14) comportant un courant maximum de décharge spécifié ($Ibat.max$) et une tension minimum spécifiée ($Vbat.min$) garantissant une durée de vie desdits éléments de stockage d'énergie (13, 14),
- des moyens de détermination des besoins de puissance ($Pchg(t)$) de ladite charge (11),
- des moyens de commande ($Cbat(t)$, $Csc(t)$) de chaque élément de stockage d'énergie (13, 14) aptes à définir une puissance ($Pbat(t)$, $Psc(t)$) délivrée par ledit élément de stockage d'énergie (13, 14), et
- des moyens de supervision (16, 17) de chaque élément de stockage d'énergie (13, 14) aptes à renseigner sur une puissance maximum instantanée ($Pbat.max(t)$) pouvant être demandée audit élément de stockage d'énergie (13, 14),

**caractérisé en ce que** :

- lesdits moyens de supervision (16, 17) sont aptes à renseigner sur une force électromotrice ($Ebat(t)$) et une résistance ($Rbat(t)$) du modèle équivalent de Thevenin de chaque élément de stockage d'énergie traduisant l'état interne et l'état de santé de chaque élément de stockage d'énergie (13, 14), **en ce que** :

  - le dispositif comporte un organe de calcul (19) apte à déterminer, pour chaque élément de stockage d'énergie (13, 14), une puissance maximale sécurisée ($Pbat.max.spec(t)$) en fonction de la force électromotrice ($Ebat(t)$) et de la résistance ($Rbat(t)$), du courant maximum spécifié ($Ibat.max$) et de la tension minimum spécifiée ($Vbat.min$), et **en ce que** :
  - lesdits moyens de commande ($Cbat(t)$, $Csc(t)$) sont ajustés au cours du temps ($t$) en fonction des besoins de puissance ($Pchg(t)$) de ladite charge (11) et de la puissance maximale sécurisée ($Pbat.max.spec(t)$) de chaque élément de stockage d'énergie (13, 14).

**2.** Dispositif selon la revendication 1, **caractérisé en ce que**, lesdits éléments de stockage d'énergie (13, 14) comportant un courant maximum de recharge spécifié ($Ibat.max.rech$) et une tension maximum de recharge spécifiée ($Vbat.max.rech$) garantissant une durée de vie desdits éléments de stockage d'énergie (13, 14), l'organe de calcul (19) est apte à déterminer, pour chaque élément de stockage d'énergie (13, 14), la puissance maximale de recharge sécurisée ($Pbat.max.rech.spec(t)$) en fonction de la force électromotrice ($Ebat(t)$) et de la résistance ($Rbat(t)$) traduisant l'état interne et l'état de santé de chaque élément de stockage d'énergie (13, 14), du courant maximum de recharge spécifié ($Ibat.rech.max$) et de la tension maximum de recharge spécifiée ($Vbat.rech.max$), lesdits moyens de commande ($Cbat(t)$, $Csc(t)$) étant ajustés au cours du temps ($t$) en fonction des besoins de puissance ($Pchg(t)$) de ladite charge (11), de la puissance maximale sécurisée ($Pbat.max.spec(t)$) et de la puissance maximale de recharge sécurisée ($Pbat.max.rech.spec(t)$) de chaque élément de stockage d'énergie (13, 14).

**3.** Dispositif selon la revendication 1 ou 2, **caractérisé en ce que** l'au moins un élément de stockage d'énergie (13, 14) est une batterie, un ensemble de super-condensateurs ou une pile à combustible.

**4.** Dispositif selon l'une des revendications 1 à 3, **caractérisé en ce que** la force électromotrice (Ebat(t)) du modèle équivalent de Thévenin de chaque élément de stockage d'énergie (13, 14) est déterminée par une loi de comportement exprimée en fonction de l'utilisation de l'élément de stockage d'énergie (13, 14).

**5.** Dispositif selon l'une des revendications 1 à 4, **caractérisé en ce que** les moyens de supervision (16, 17) sont aptes à renseigner sur un état interne de chaque élément de stockage d'énergie (13, 14), l'organe de calcul (19) étant apte à déterminer une force électromotrice (Ebat(t)) et une résistance (Rbat(t)) du modèle équivalent de Thevenin de chaque élément de stockage d'énergie (13, 14) en fonction de l'état interne de chaque élément de stockage d'énergie (13, 14), lesdits moyens de commande (Cbat(t), Csc(t)) étant ajustés au cours du temps (t) en fonction de la force électromotrice (Ebat(t)) et de la résistance (Rbat(t)).

**6.** Dispositif selon la revendication 5, **caractérisé en ce que** force électromotrice (Ebat(t)) et la résistance (Rbat(t)) sont variables au cours du temps (t).

**7.** Dispositif selon les revendications 2 et 5, **caractérisé en ce que** ladite puissance maximale sécurisée (Pbat.max. spec(t)) est déterminée par l'équation suivante :

$$Pbat.max.spec(t)$$
$$= \min\left[\frac{E^2bat(t)}{4\mathrm{Rbat}(t)}, \frac{(Ebat(t) - Vbat.min)Vbat.min}{\mathrm{Rbat}(t)}, Ebat(t)Ibat.max\right.$$
$$\left. - Rbat(t)I^2bat.\max\right].$$

**8.** Dispositif selon les revendications 2 et 5, **caractérisé en ce que** ladite puissance maximale de recharge sécurisée (Pbat.max.rech.spec(t)) est déterminée par l'équation suivante :

$$Pbat.max.rech.spec(t)$$
$$= \max\left[-\frac{(Vbat.max - Ebat(t))Vbat.max}{\mathrm{Rbat}(t)}, Ebat(t)Ibat.rech.max\right.$$
$$\left. - Rbat(t)I^2bat.rech.\max\right].$$

**9.** Procédé de contrôle et de commande d'un dispositif d'alimentation électrique selon l'une des revendications 1 à 8, **caractérisé en ce qu'**il comporte les étapes suivantes :

- déterminer (21) au cours du temps (t) ladite puissance maximale sécurisée (Pbat.max.spec(t)) du premier élément de stockage d'énergie (13),
- comparer (22) les besoins de puissance (Pchg(t)) de la charge (11) avec la puissance maximale sécurisée (Pbat.max.spec(t)) du premier élément de stockage d'énergie (13), et
- ajuster (23) les moyens de commande (Cbat(t), Csc(t)) pour utiliser le second élément de stockage d'énergie (14) lorsque les besoins de puissance (Pchg(t)) de la charge (11) sont supérieurs à la puissance maximale sécurisée (Pbat.max.spec(t)) du premier élément de stockage d'énergie (13).

**10.** Procédé selon la revendication 9, **caractérisé en ce qu'**il comporte les étapes suivantes :

- déterminer (25) une puissance disponible (Pbat.disp(t)) en fonction du temps (t) lorsque les besoins de puissance (Pchg(t)) de la charge (11) sont inférieurs à la puissance maximale sécurisée (Pbat.max.spec(t)) du premier élément de stockage d'énergie (13),
- comparer (26) la puissance disponible (Pbat.disp(t)) du premier élément de stockage d'énergie (13) avec une puissance maximale de recharge sécurisée (Pbat.max.rech.spec(t)) du second élément de stockage d'énergie (14), et
- ajuster (27) les moyens de commande (Cbat(t), Csc(t)) pour recharger le second élément de stockage d'énergie (14) avec le premier élément de stockage d'énergie (13) avec la puissance disponible (Pbat.disp(t)) du premier élément de stockage d'énergie (13).

**Patentansprüche**

1.  Vorrichtung zur Stromversorgung (10) einer Last (11), die aufweist:

    - mindestens zwei mit der Last (11) verbundene Energiespeicherelemente (13, 14), wobei die Energiespeicherelemente (13, 14) einen maximalen spezifizierten Entladestrom (Ibat.max) und eine spezifizierte minimale Spannung (Vbat.min) aufweisen, die eine Lebensdauer der Energiespeicherelemente (13, 14) garantieren,
    - Einrichtungen zur Bestimmung der Leistungsbedürfnisse (Pchg(t)) der Last (11),
    - Steuereinrichtungen (Cbat(t), Csc(t)) jedes Energiespeicherelements (13, 14), die eine vom Energiespeicherelement (13, 14) gelieferte Leistung (Pbat(t), Psc(t)) definieren können, und
    - Überwachungseinrichtungen (16, 17) jedes Energiespeicherelements (13, 14), die über eine maximale Augenblicksleistung (Pbat.max(t)) informieren können, die vom Energiespeicherelement (13, 14) gefordert werden kann,

    **dadurch gekennzeichnet, dass**:

    - die Überwachungseinrichtungen (16, 17) über eine elektromotorische Kraft (Ebat(t)) und einen Widerstand (Rbat(t)) des äquivalenten Thévenin-Modells jedes Energiespeicherelements informieren können, das den inneren Zustand und den Gesundheitszustand jedes Energiespeicherelements (13, 14) ausdrückt, dass:

        - die Vorrichtung ein Rechenorgan (19) aufweist, das für jedes Energiespeicherelement (13, 14) eine gesicherte maximale Leistung (Pbat.max.spec(t)) abhängig von der elektromotorischen Kraft (Ebat(t)) und vom Widerstand (Rbat(t)), vom spezifizierten maximalen Strom (Ibat.max) und von der spezifizierten minimalen Spannung (Vbat.min) bestimmen kann, und dass:
        - die Steuereinrichtungen (Cbat(t), Csc(t)) im Lauf der Zeit (t) abhängig von den Leistungsbedürfnissen (Pchg(t)) der Last (11) und der gesicherten maximalen Leistung (Pbat.max.spec(t)) jedes Energiespeicherelements (13, 14) eingestellt werden.

2.  Vorrichtung nach Anspruch 1, **dadurch gekennzeichnet, dass**, da die Energiespeicherelemente (13, 14) einen spezifizierten maximalen Aufladestrom (Ibat.max.rech) und eine spezifizierte maximale Aufladespannung (Vbat.max.rech) aufweisen, die eine Lebensdauer der Energiespeicherelemente (13, 14) garantieren, das Rechenorgan (19) für jedes Energiespeicherelement (13, 14) die gesicherte maximale Aufladeleistung (Pbat.max.rech.spec(t)) abhängig von der elektromotorischen Kraft (Ebat (t)) und vom Widerstand (Rbat (t)), der den inneren Zustand und den Gesundheitszustand jedes Energiespeicherelements (13, 14) ausdrückt, vom spezifizierten maximalen Aufladestrom (Ibatrech.max) und von der spezifizierten maximalen Aufladespannung (Vbatrech.max) bestimmen kann, wobei die Steuereinrichtungen (Cbat(t), Csc(t)) im Lauf der Zeit (t) abhängig von den Leistungsbedürfnissen (Pchg(t)) der Last (11), der gesicherten maximalen Leistung (Pbat.max.spec(t)) und der gesicherten maximalen Aufladeleistung (Pbat.max.rech.spec(t)) jedes Energiespeicherelements (13, 14) eingestellt werden.

3.  Vorrichtung nach Anspruch 1 oder 2, **dadurch gekennzeichnet, dass** das mindestens eine Energiespeicherelement (13, 14) eine Batterie, eine Einheit von Superkondensatoren oder eine Brennstoffzelle ist.

4.  Vorrichtung nach einem der Ansprüche 1 bis 3, **dadurch gekennzeichnet, dass** die elektromotorische Kraft (Ebat(t)) des äquivalenten Thévenin-Modells jedes Energiespeicherelements (13, 14) durch ein Verhaltensgesetz festgelegt wird, das abhängig von der Verwendung des Energiespeicherelements (13, 14) ausgedrückt wird.

5.  Vorrichtung nach einem der Ansprüche 1 bis 4, **dadurch gekennzeichnet, dass** die Überwachungseinrichtungen (16, 17) über einen inneren Zustand jedes Energiespeicherelements (13, 14) informieren können, wobei das Rechenorgan (19) eine elektromotorische Kraft (Ebat(t)) und einen Widerstand (Rbat(t)) des äquivalenten Thevenin-Modells jedes Energiespeicherelements (13, 14) abhängig vom inneren Zustand jedes Energiespeicherelements (13, 14) bestimmen kann, wobei die Steuereinrichtungen (Cbat(t), Csc(t)) im Lauf der Zeit (t) abhängig von der elektromotorischen Kraft (Ebat(t)) und vom Widerstand (Rbat(t)) eingestellt werden.

6.  Vorrichtung nach Anspruch 5, **dadurch gekennzeichnet, dass** die elektromotorische Kraft (Ebat(t)) und der Widerstand (Rbat(t)) im Lauf der Zeit (t) variabel sind.

7. Vorrichtung nach den Ansprüchen 2 und 5, **dadurch gekennzeichnet, dass** die gesicherte maximale Leistung (Pbat.max.spec(t)) durch die folgende Gleichung festgelegt wird:

$$Pbat.max.spec(t)$$
$$= min\left[\frac{E^2bat(t)}{4Rbat(t)}, \frac{(Ebat(t) - Vbat.min)Vbat.min}{Rbat(t)}, Ebat(t)Ibat.max\right.$$
$$\left. - Rbat(t)I^2bat.max\right]$$

8. Vorrichtung nach den Ansprüchen 2 und 5, **dadurch gekennzeichnet, dass** die gesicherte maximale Aufladeleistung (Pbat.max.rech.spec(t)) durch die folgende Gleichung festgelegt wird:

$$Pbat.max.rech.spec(t)$$
$$= max\left[-\frac{(Vbat.max - Ebat(t))Vbat.max}{Rbat(t)}, Ebat(t)Ibat.rech.max\right.$$
$$\left. - Rbat(t)I^2bat.rech.max\right]$$

9. Verfahren zur Kontrolle und Steuerung einer Stromversorgungsvorrichtung nach einem der Ansprüche 1 bis 8, **dadurch gekennzeichnet, dass** es die folgenden Schritte aufweist:

   - Bestimmen (21) im Lauf der Zeit (t) der gesicherten maximalen Leistung (Pbat.max.spec(t)) des ersten Energiespeicherelements (13),
   - Vergleichen (22) der Leistungsbedürfnisse (Pchg(t)) der Last (11) mit der gesicherten maximalen Leistung (Pbat.max.spec(t)) des ersten Energiespeicherelements (13), und
   - Einstellen (23) der Steuereinrichtungen (Cbat(t), Csc(t)), um das zweite Energiespeicherelement (14) zu verwenden, wenn die Leistungsbedürfnisse (Pchg(t)) der Last (11) höher sind als die gesicherte maximale Leistung (Pbat.max.spec(t)) des ersten Energiespeicherelements (13).

10. Verfahren nach Anspruch 9, **dadurch gekennzeichnet, dass** es die folgenden Schritte aufweist:

   - Bestimmen (25) einer verfügbaren Leistung (Pbat.disp(t)) abhängig von der Zeit (t), wenn die Leistungsbedürfnisse (Pchg(t)) der Last (11) niedriger als die gesicherte maximale Leistung (Pbat.max.spec(t)) des ersten Energiespeicherelements (13) sind,
   - Vergleichen (26) der verfügbaren Leistung (Pbat.disp(t)) des ersten Energiespeicherelements (13) mit einer gesicherten maximalen Aufladeleistung (Pbat.max.rech.spec(t)) des zweiten Energiespeicherelements (14), und
   - Einstellen (27) der Steuereinrichtungen (Cbat(t), Csc(t)), um das zweite Energiespeicherelement (14) mit dem ersten Energiespeicherelement (13) mit der verfügbaren Leistung (Pbat.disp(t)) des ersten Energiespeicherelements (13) aufzuladen.

**Claims**

1. Device for the electric power supply (10) of a load (11), comprising:

   - at least two energy storage elements (13, 14) connected to said load (11), said energy storage elements (13, 14) comprising a maximum specified discharge current (Ibat.max) and a minimum specified voltage (Vbat.min) guaranteeing a life of said energy storage elements (13, 14),
   - means for determining the power needs (Pchg(t)) of said load (11),
   - means (Cbat(t), Csc(t)) for controlling each energy storage element (13, 14) which are able to define a power (Pbat(t), Psc(t)) delivered by said energy storage element (13, 14), and

- means (16, 17) for monitoring each energy storage element (13, 14) which are able to provide information about a maximum instantaneous power (Pbat.max(t)) that can be requested of said energy storage element (13, 14),

**characterized in that**:

- said monitoring means (16, 17) are able to provide information about an electromotive force (Ebat(t)) and a resistance (Rbat(t)) of the Thévenin equivalent model of each energy storage element reflecting the internal state and the state of health of each energy storage element (13, 14), **in that**:

- the device comprises a calculation body (19) able to determine, for each energy storage element (13, 14), a maximum secured power (Pbat.max.spec(t)) according to the electromotive force (Ebat(t)) and to the resistance (Rbat(t)), according to the maximum specified current (Ibat.max) and to the minimum specified voltage (Vbat.min), and **in that**:
- said control means (Cbat(t), Csc(t)) are adjusted over time (t) according to the power needs (Pchg(t)) of said load (11) and to the maximum secured power (Pbat.max.spec(t)) of each energy storage element (13, 14).

2. Device according to Claim 1, **characterized in that** since said energy storage elements (13, 14) comprise a maximum specified recharging current (Ibat.max.rech) and a maximum specified recharging voltage (Vbat.max.rech) guaranteeing a life of said energy storage elements (13, 14), the calculation body (19) is able to determine, for each energy storage element (13, 14), the maximum secured recharging power (Pbat.max.rech.spec(t)) according to the electromotive force (Ebat(t)) and to the resistance (Rbat(t)) reflecting the internal state and the state of health of each energy storage element (13, 14), according to the maximum specified recharging current (Ibat.rech.max) and to the maximum specified recharging voltage (Vbat.rech.max), said control means (Cbat(t), Csc(t)) being adjusted over time (t) according to the power needs (Pchg(t)) of said load (11), to the maximum secured power (Pbat.max.spec(t)) and to the maximum secured recharging power (Pbat.max.rech.spec(t)) of each energy storage element (13, 14).

3. Device according to Claim 1 or 2, **characterized in that** the at least one energy storage element (13, 14) is a battery, a set of supercapacitors or a fuel cell.

4. Device according to one of Claims 1 to 3, **characterized in that** the electromotive force (Ebat(t)) of the Thévenin equivalent model of each energy storage element (13, 14) is determined by a law of behavior expressed according to the utilization of the energy storage element (13, 14).

5. Device according to one of Claims 1 to 4, **characterized in that** the monitoring means (16, 17) are able to provide information about an internal state of each energy storage element (13, 14), the calculation body (19) being able to determine an electromotive force (Ebat(t)) and a resistance (Rbat(t)) of the Thévenin equivalent model of each energy storage element (13, 14) according to the internal state of each energy storage element (13, 14), said control means (Cbat(t), Csc(t)) being adjusted over time (t) according to the electromotive force (Ebat(t)) and to the resistance (Rbat(t)).

6. Device according to Claim 5, **characterized in that** the electromotive force (Ebat(t)) and the resistance (Rbat(t)) are variable over time (t).

7. Device according to Claims 2 and 5, **characterized in that** said maximum secured power (Pbat.max.spec(t)) is determined by the following equation:

$$Pbat.max.spec(t)$$
$$= \min\left[\frac{E^2bat(t)}{4\mathrm{Rbat(t)}}, \frac{(Ebat(t) - Vbat.min)Vbat.min}{\mathrm{Rbat(t)}}, Ebat(t)Ibat.max\right.$$
$$\left. - Rbat(t)I^2bat.\max\right].$$

8. Device according to Claims 2 and 5, **characterized in that** said maximum secured recharging power (Pbat.max.rech.spec(t)) is determined by the following equation:

$$Pbat.max.rech.spec(t)$$

$$= \max\left[-\frac{(Vbat.max - Ebat(t))Vbat.max}{\text{Rbat(t)}}, Ebat(t)Ibat.rech.max\right.$$

$$\left. - Rbat(t)I^2bat.rech.\max\right].$$

9. Method for controlling and commanding an electric power supply device according to one of Claims 1 to 8, **characterized in that** it comprises the following steps:

   - determining (21) over time (t) said maximum secured power (Pbat.max.spec(t)) of the first energy storage element (13),
   - comparing (22) the power needs (Pchg(t)) of the load (11) with the maximum secured power (Pbat.max.spec(t)) of the first energy storage element (13), and
   - adjusting (23) the control means (Cbat(t), Csc(t)) in order to utilize the second energy storage element (14) when the power needs (Pchg(t)) of the load (11) are greater than the maximum secured power (Pbat.max.spec(t)) of the first energy storage element (13).

10. Method according to Claim 9, **characterized in that** it comprises the following steps:

   - determining (25) an available power (Pbat.disp(t)) according to the time (t) when the power needs (Pchg(t)) of the load (11) are lower than the maximum secured power (Pbat.max.spec(t)) of the first energy storage element (13),
   - comparing (26) the available power (Pbat.disp(t)) of the first energy storage element (13) with a maximum secured recharging power (Pbat.max.rech.spec(t)) of the second energy storage element (14), and
   - adjusting (27) the control means (Cbat(t), Csc(t)) in order to recharge the second energy storage element (14) with the first energy storage element (13) with the available power (Pbat.disp(t)) of the first energy storage element (13).

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2947006

- US 2012319653 A1

**Littérature non-brevet citée dans la description**

- An Energy Management System for a Battery Ultracapacitor Hybrid Electric Vehicle. *Fourth International Conference on Industrial and Information Systems, ICIIS 2009, 28 - 31 December 2009*

- Optimizing for Efficiency or Battery Life in a Battery/Supercapacitor Electric Vehicle. *IEEE TRANSACTIONS ON VEHICULAR TECHNOLOGY,* Mai 2012, vol. 61 (4